# EUROPÄISCHE PATENTANMELDUNG

(11) **EP 1 862 101 A1**
(43) Veröffentlichungstag der Anmeldung: **05.12.2007**
(21) Anmeldenummer: 07010895.6
(22) Anmeldetag: 01.06.2007
(51) Int. Cl.: A47J 37/07

(54) **Grillvorrichtung**

(30) Priorität: 02.06.2006 DE 202006009180 U; 07.11.2006 DE 202006017019 U
(71) Anmelder: Drecker, Henrik, 48151 Münster (DE)
(72) Erfinder: Drecker, Henrik, 48151 Münster (DE)
(74) Vertreter: von Hellfeld, Axel

(57) **Zusammenfassung**

Eine Grillvorrichtung hat einen langgestreckten quaderförmigen Kasten (12), in dem ein Grillrost (14) abstützbar ist. Mit Haken ist der Kasten an einem Geländer oder einer Brüstung befestigbar.

## Beschreibung

Die Erfindung betrifft eine Grillvorrichtung, insbesondere eine Grillvorrichtung zum Aufhängen an einem Balkongeländer, einer Balkonmauer, einer Brüstung oder dergleichen.

Nicht jedermann hat eine große Terasse oder einen Garten zum Grillen zur Verfügung. Die Erfindung setzt sich das Ziel, eine Grillvorrichtung bereitzustellen, die mit relativ wenig Aufwand wahlweise an unterschiedlichen Stellen aufbaubar ist, insbesondere auf einem Balkon unter Verwendung eines Balkongeländers oder einer Balkonbrüstung.

Hierfür stellt die Erfindung eine Grillvorrichtung bereit mit einem langgestreckten quaderförmigen Kasten, auf oder in dem ein Grillrost abstützbar ist, und mit Einrichtungen zum Positionieren des Kastens an oder auf einem Geländer oder einer Brüstung.

Bevorzugt werden dem Kasten zum Positionieren an einem Geländer zwei oder mehr Haken beigegeben.

Bevorzugt besteht der genannte Kasten aus einem Material, das gegen zum Grillen erforderliche Hitze beständig ist.

Eine bevorzugte Variante der Erfindung sieht vor, dass der Grillrost mit elektrischem Strom aufheizbar ist.

Eine andere Variante der Erfindung sieht einen zweischaligen Aufbau des Kastens vor mit einem aus einem äußeren Kasten entfernbaren Einsatzbehälter.

Eine andere Variante der Erfindung sieht ein Betreiben der Grillvorrichtung mit Kohle (Holzkohle) vor und hierfür eine äußere Wanne und eine darin eingehängte Kohlenschale, die verhindert, dass in die Kohlenschale eingelegte Kohle direkt mit der äußeren Wanne in Kontakt kommt.

Bei dieser Variante der Erfindung ist der Grillrost bevorzugt in die äußere Wanne einsetzbar und aus dieser entnehmbar.

Zwischen der genannten äußeren Wanne und der darin eingehängten oder eingelegten Kohlenschale ist bevorzugt ein wärmeisolierender Luftraum vorgesehen.

Zur Zirkulation von Luft sind bevorzugt Löcher im Bodenbereich der Kohlenschale und/oder im Bodenbereich der äußeren Wanne vorgesehen.

Eine andere bevorzugte Ausgestaltung der Erfindung sieht einen Deckel vor, mit dem der quaderförmige Kasten bzw. die genannte äußere Wanne vollständig abdeckbar sind. Damit kann der Kasten bzw. die äußere Wanne bei Nichtgebrauch abgedeckt werden und die bevorzugt vorgesehene Mulde kann als Ablage dienen.

Der erfindungsgemäße hitzebeständige Kasten ist zum Beispiel aus einem Metallblech gefertigt. Er kann wahlweise dann, wenn der Besitzer der Grillvorrichtung diese nicht als solche gebrauchen will, auch als Blumenkasten eingesetzt werden, ohne dass zusätzliche Einrichtungen für dessen Installation erforderlich wären.

Der erfindungsgemäße Kasten kann auch so gestaltet sein, dass er in einem schon vorhandenen Blumenkasten aufgenommen wird. Dabei kann mit einfachen Mitteln, wie einigen Stücken Holz oder dergleichen die erforderliche thermische Isolierung zwischen dem Kasten und dem herkömmlichen Blumenkasten sichergestellt werden. Es können auch Rippen oder andere Abstandshalter am Kasten vorgesehen sein, um Abstand zwischen diesem und dem Blumenkasten sicherzustellen, sofern dieser Einsatz vorgesehen ist.

Zum Betreiben des elektrische geheizten Grillrostes wird bevorzugt ein Transformator eingesetzt, der die im Haushalt verfügbare Wechselspannung in eine Spannung transformiert, mit der die Grillvorrichtung unter Beachtung der Sicherheitserfordernisse betreibbar ist.

Nachfolgend werden Ausführungsbeispiele der Erfindung anhand der Zeichnung näher beschrieben. Es zeigt:
- Figur 1: schematisch eine Grillvorrichtung mit elektrischer Aufheizung montiert an einem Geländer;
- Figur 2: einen Schnitt senkrecht zur Längserstreckung der Grillvorrichtung gemäß Figur 1;
- Figur 3: einen Haken zum Aufhängen der Grillvorrichtung an einer Brüstung;
- Figur 4: eine Brüstung mit Haken zum Aufhängen eines Kastens;
- Figur 5: ein anderes Ausführungsbeispiel einer Grillvorrichtung zur Verwendung mit Holzkohle; und
- Figur 6: die Grillvorrichtung gemäß Figur 5 in Explosionsdarstellung.

An einem Balkongeländer 10 ist mittels mindestens zweier Haken 16 (Figur 2) ein Kasten 12 aus Metall oder einem anderen hitzebeständigen Material abgestützt. Mit einem U-förmigen Hakenteil 16A umgreift der Haken 16 das Geländer 10 und mit einem in umgekehrter Richtung U-förmigen Hakenteil 16B umgreift der Haken 16 den Kasten 12.

In dem Kasten 12 ist auf Anschlägen 18 ein Grillrost 14 abgestützt, der etwas in den Kasten 12 versenkt ist, sodass Grillgut auf dem Grillrost 14 nicht herunterfallen kann.

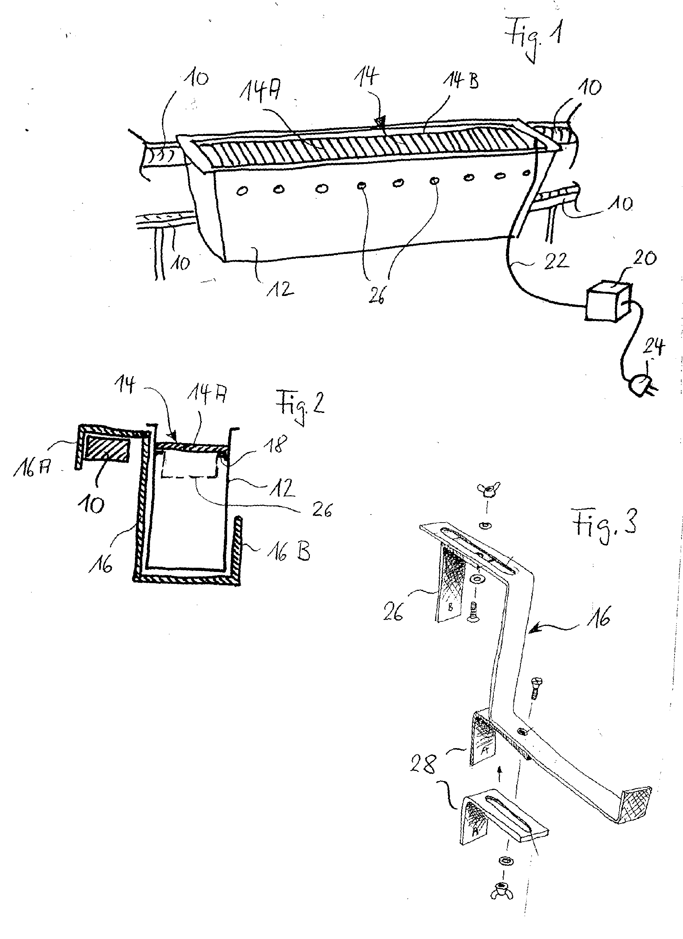

Der Grillrost 14 hat in seinem Grundaufbau die Struktur eines herkömmlichen Rostes, also eine Vielzahl von sich parallel erstreckenden metallischen Streben, auf denen das Grillgut (nicht gezeigt) ablegbar ist. Anders als ein mit Kohle betriebener Grill, wird aber der Grill mit elektrischer Energie geheizt. Hierzu ist ein Transformator 20 über eine Leitung 22 mit dem Grillrost 14 verbunden, um den Grillrost aufzuheizen. Dazu können in den einzelnen Streben des Grillrostes 14 elektrische isolierte Widerstandsdrähte angeordnet sein, die sich bei Stromfluss erhitzen. Die in Figur 1 gezeigten, sich zueinander parallel erstreckenden Stege 14A des Grillrostes 14 können zum Beispiel elektrisch durch Parallelschaltung der in ihrem Inneren verlaufenden Heizdrähte mit elektrischem Strom beschickt werden, wobei dann die beiden Spannungspole sich elektrisch isoliert im Inneren der beiden sich in Längsrichtung erstreckenden Abstützstege 14B befinden.

Luftlöcher 26 im Kasten 12 erlauben eine Luftzirkulation durch den Grillrost 14.

Gemäß einer nicht dargestellten Weiterbildung kann im Kasten 12 ein Einsatz angeordnet werden, zum Beispiel in Form eines Metallbehälters, insbesondere Edelstahlbehälters, der direkt unter dem Grillrost 14 angeordnet ist, um Fett, Öl und dergleichen aufzufangen. Dieser Einsatzbehälter kann leicht aus dem Kasten 12 für Reinigungszwecke entnommen werden. Mit dieser Variante der Erfindung kann für den Kasten 12 ein Material vorgesehen sein, bei dem die Hitzebeständigkeit geringer ist als dann, wenn kein derartiger zusätzlicher Einsatzbehälter vorgesehen ist. Der genannte Einsatzbehälter kann zum Beispiel 3 bis 10 cm unter dem Grillrost 14 abgestützt werden und hierfür sind dann Mittel analog den Anschlägen 18 im Kasten 12 ausgeformt.

Figur 2 zeigt eine entsprechende Ausgestaltung mit einem Einsatzbehälter 26, der, ebenso wie der Rost 14, bei dieser Variante auf den Anschlägen 18 im Kasten 12 abgestützt ist.

Figur 3 zeigt Einzelheiten eines Halters zum Halten eines Kastens 12 gemäß Figur 1 mit Winkelstücken 26, 28, die mittels Schrauben am Haken 16 befestigbar sind und die Abstützung an der Brüstung fördern, wobei zur genauen Einstellung der Winkelstücke Langlöcher in dem Haken 16 bzw. in den Winkelstücken vorgesehen sind.

Figur 4 zeigt schematisch die Montage der beschriebenen Haken an einer Balkonbrüstung 30.

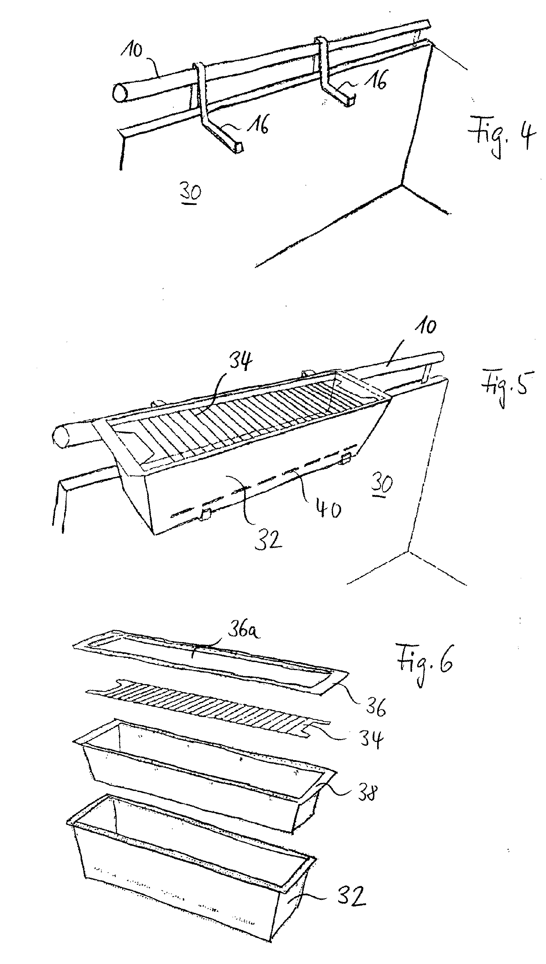

Die Figuren 5 und 6 zeigen ein anderes Ausführungsbeispiel einer Grillvorrichtung mit Verwendung von Holzkohle. Diese Grillvorrichtung weist eine äußere Wanne 32 auf, in die eine Kohlenschale 38 einhängbar ist. Gemäß der Explosionsdarstellung in Figur 6, wird die Kohlenschale 38 in der äußeren Wanne 32 aufgenommen. Die äußere Wanne 32 hat bei der Montage der Grillvorrichtung die Funktion des Kastens 12 beim obigen Ausführungsbeispiel. Zwischen der Kohlenschale 38 und dem Boden der äußeren Wanne 32 ist ein wärmeisolierende Freiraum vorgesehen. Die Abstützung der Kohlenschale 38 in der äußeren Wanne 32 kann unterschiedlich erfolgen. Zum Beispiel kann ein äußerer Wulst an der Kohlenschale 38 sich auf dem oberen Rand der äußeren Wanne 32 abstützen. Es ist auch möglich, die Kohlenschale 38 oder die äußere Wanne 32 im Bodenbereich mit Abstandshaltern zu versehen. Auch können die Kohlenschale 38 oder die äußere Wanne 32 mit Rippen versehen sein, die allseitig bewirken, dass die Kohlenschale 38 passgenau und mit gewünschtem Abstand von der äußeren Wanne 32 positionierbar ist.

Ein Grillrost 34 ist in Bezug auf die Kohlenschale 38 abdeckbar. Alle Teile sind mit Angriffsmöglichkelten versehen, um die Grillvorrichtung in einfacher Weise auseinanderbauen zu können.

Ein Deckel 36 mit einer Mulde 36a kann die Grillvorrichtung dann abdecken, wenn sie nicht in Betrieb ist.

In Abwandlung des vorstehend beschriebenen Ausführungsbeispieles, bei dem die Haken zum Aufhängen des Kastens eingesetzt werden, kann der Kasten auch bei geeignet gestalteten Geländern bzw. Brüstungen ohne Haken sicher positioniert werden. Zum Beispiel weisen Geländer bzw. Brüstungen bisweilen Aufnahmen (Vertiefungen) auf, in die Blumenkästen passen. In solche Aufnahmen bzw. Vertiefungen können auch die erfindungsgemäßen Kästen gesetzt werden. Die erfindungsgemäßen Kästen entsprechen deshalb in ihrem Abmessungen den üblichen Abmessungen von Blumenkästen.

## Patentansprüche

1. Grillvorrichtung mit einem langgestreckten quaderförmigen Kasten (12), auf oder in dem ein Grillrost (14) abstützbar ist, und mit einer Einrichtung (16) zum Positionieren des Kastens (12) an oder auf einem Geländer (10) oder einer Brüstung.

2. Grillvorrichtung nach Anspruch 1 mit zumindest zwei Haken (16) zum Aufhängen des Kastens (12) an einem Geländer (10) oder einer Brüstung.

3. Grillvorrichtung nach Anspruch 1 oder 2, **dadurch gekennzeichnet, dass** der Kasten aus hitzebeständigem Material besteht.

4. Grillvorrichtung nach Anspruch 1, 2 oder 3 **dadurch gekennzeichnet, dass** der Grillrost (14) mit elektrischem Strom aufheizbar ist.

5. Grillvorrichtung nach einem der vorhergehenden Ansprüche mit einem Einsatzbehälter (26) aus hitzebeständigem Material im Kasten (12).

6. Grillvorrichtung nach Anspruch 1 mit einer äußeren Wanne (32) und einer darin eingehängten Kohlenschale (38), die verhindert, dass in die Kohlenschale eingelegte Kohlen direkt mit der äußeren Wanne (32) in Kontakt kommen.

7. Grillvorrichtung nach Anspruch 6 mit einem Grillrost (34), der in die äußere Wanne (32) einsetzbar und aus dieser entnehmbar ist.

8. Grillvorrichtung nach einem der Ansprüche 6 oder 7, **dadurch gekennzeichnet, dass** zwischen der äußeren Wanne (32) und der darin eingehängten oder eingelegten Kohlenschale (38) ein Luftraum verbleibt.

9. Grillvorrichtung nach einem der Ansprüche 6 bis 8, **dadurch gekennzeichnet, dass** die Kohlenschale (38) zumindest am Boden mit Löchern zum Durchtritt von Luft versehen ist.

10. Grillvorrichtung nach einem der Ansprüche 6 bis 9, **dadurch gekennzeichnet, dass** die äußere Wanne (32) im Bodenbereich mit Luftlöchern (40) versehen ist.

11. Grillvorrichtung nach einem der vorhergehenden Ansprüche mit einem Deckel (36), der eine Mulde (36a) aufweist.
